# EUROPÄISCHE PATENTSCHRIFT

(11) **EP 1 082 007 B1**
(45) Veröffentlichungstag und Bekanntmachung des Hinweises auf die Patenterteilung: **09.07.2003**
(21) Anmeldenummer: 99923596.3
(22) Anmeldetag: 14.05.1999
(51) Int. Cl.: A01N 25/30, A01N 53/00, A01N 25/04

(54) **Wässrige, agrochemische Wirkstoffe enthaltende Mittel**
Aqueous agents containing agrochemicals
Agents aqueux contenant des principes actifs agrochimiques

(30) Priorität: 26.05.1998 DE 19823252
(43) Veröffentlichungstag der Anmeldung: 14.03.2001
(73) Patentinhaber: Cognis Deutschland GmbH & Co. KG, 40589 Düsseldorf (DE)
(72) Erfinder: WOLLENWEBER, Horst-Werner, D-40597 Düsseldorf (DE); BEHLER, Ansgar, D-46240 Bottrop (DE); RATHS, Hans-Christian, D-40789 Monheim (DE); MAINX, Hans-Georg, D-42799 Leichlingen (DE); REINHARDT, Jürgen, D-40724 Hilden (DE)
(86) Internationale Anmeldenummer: EP9903328
(87) Internationale Veröffentlichungsnummer: WO99060851

(56) Entgegenhaltungen:
- EP-A- 0 681 865
- EP-A- 0 710 500
- WO-A-91/15441
- WO-A-94/22301
- WO-A-96/22109
- GB-A- 1 050 497
- US-A- 4 022 808
- US-A- 4 681 900

## Beschreibung

Die vorliegenden Erfindung betrifft wäßrige Mittel, die mindestens einen agrochemischen Wirkstoff und bestimmte alkoxylierte Fettsäureester enthalten, die Verwendung solcher Fettsäureester zur Herstellung von Mitteln, die agrochemische Wirkstoffe enthalten sowie ein Verfahren zum Aufbringen von agrochemischen Wirkstoffen auf Pflanzen.

Zum Schutz von Nutzpflanzen gegen Schädlinge und Unkräuter sind eine Vielzahl von Substanzen bekannt, die aber häufig nur geringe oder keine Wasserlöslichkeit zeigen. Daher werden diese Wirkstoffe häufig in Form von mineralölbasierten Mitteln verkauft. Wegen der damit verbundenen Umweltproblematik, insbesondere wegen der mangelhaften biologischen Abbaubarkeit des Lösungsmittels, wird heutzutage versucht, auf diese Produkte zu verzichten. Die agrochemischen Wirkstoffe werden statt dessen in Form einer wäßrigen Dispersion bzw. Emulsion formuliert und können dann problemlos, z.B. durch Aufspritzen auf die Pflanzen verwendet werden.

Um die unterschiedlichen Wirkstoffe in Wasser zu dispergieren oder emulgieren, sind der Fachwelt eine Vielzahl von Hilfsmitteln bekannt. Um stabile Dispersionen bzw. Emulsionen zu erhalten, müssen bei der Herstellung der Mittel aber häufig sehr hohe Scherkräfte angewendet werden. Außerdem kann es bei großen Temperaturdifferenzen bei der Lagerung und Verwendung der Mittel zu einer Trennung der Emulsion bzw. Dispersion kommen. Häufig werden die Pflanzenschutzmittel auch als Konzentrate verkauft und erst vor Ort auf die gewünschte Verdünnung gebracht. Dabei fehlt es aber häufig an geeigneten maschinellen Hilfsmitteln, wie Hochgeschwindigkeitsmischern, um Mittel in der gewünschten, stabil emulgierten Form zu erhalten.

Die **WO 96/22109** beschreibt daher die Verwendung von ethoxylierten Fettsäureestern mit bestimmten HLB-Werten zur Herstellung von Pflanzenschutzmitteln oder pharmazeutischen Zubereitungen. Diese Ester sind biologisch abbaubar und selbstemulgierend. Allerdings weisen Pflanzenschutzmittel, die diese Ester als Emulgatoren enthalten nicht immer eine ausreichende Stabilität, gerade bei hohen Temperaturen auf.

Die **US 4,681,900** offenbart eine Biozidzusammensetzung, enthaltend ein Trägermaterial, ein Biozid sowie ein Insektizid, Bakteriezid, Mitizid, Fungizid, Herbizid oder Pflanzenwachstumsregulator und einen Biozidaktivator. Dieser enthält ein Produkt, das hergestellt wird durch Umsetzung von Propylenoxid alleine oder zusammen mit Ethylenoxid mit einem Gemisch aus mind. einem Fettsäuretriglycerid und mind. einem polyhydrischen Alkohol unter Polymerisationsbedingungen.

Aus der **EP-A 681 865** kann der Fachmann ein schaumartiges Netzmittel entnehmen, das ethoxylierte und ggf. porpoxylierte Fettalkohole enthält. Es werden allerdings keine Mittel offenbart, die agrochemische Wirkstoffe enthalten.

Aus der **EP-A 710 500** gehen Tensidgemische hervor, die Silantenside und Polyalkylenoxide als Netzmittel für Pflanzenschutzformulierungen enthalten.

Die **WO-A 94/22301** offenbart einen "Pesticide Spreader", umfassend mind. ein nichtionisches, einen Ester aufweisendes oberflächenaktives Mittel ausgewählt von Fettsäuren/Polyoxyalkylenetherestern. Der Spreader ist anwendbar auf wässrige Pestizide. enthaltende Lösungen.

Es besteht daher weiterhin Bedarf nach wäßrig formulierten Pflanzenschutzmitteln, die auch bei hohen Temperaturen lagerstabil sind und die sich leicht herstellen lassen.

Überraschenderweise wurde gefunden, daß Mittel, die agrochemische Wirkstoffe enthalten und als Dispergatoren bzw. Emulgatoren bestimmte propoxylierte Fettsäureester, die oben genannten Anforderungen an Stabilität und Handhabbarkeit erfüllen.

Gegenstand der vorliegenden Anmeldung sind daher wäßrige Mittel, die mindestens einen agrochemischen Wirkstoff enthalten, der bei 21° C zu weniger als 10 Gew.-% in Wasser löslich ist und eine oder mehrere Verbindungen der allgemeinen Formel (I)

RO-(C₂H₄O)ₙ(C₃H₆O)ₘ-R' (I)

in der RO für einen Alkoholrest, ausgewählt aus der Gruppe der verzweigten oder linearen, gesättigten oder ungesättigten einwertigen Alkohole mit 1 bis 6 C-Atomen oder der Polyole mit 2 bis 12 C-Atomen und 2 bis 6 Hydroxylgruppen steht und R' für Wasserstoff und/oder eine Gruppe -CO-R" steht, in der R" einen verzweigten oder linearen, gesättigten oder ungesättigten Alkylrest mit 5 bis 29 C-Atomen bedeutet, m eine Zahl zwischen 1 und 10 ist und n Null ist oder eine Zahl zwischen 1 und 40 bedeutet.

Die erfindungsgemäßen Mittel können sowohl feste als auch flüssige wasserunlösliche Inhaltsstoffe enthalten. Sie bilden daher sowohl Dispersionen als auch Emulsionen. Im Rahmen dieser Anmeldung werden beide Typen unter dem Begriff Dispersion zusammengefaßt.

Die alkoxylierten Fettsäureester der Formel (I) sind bekannte Substanzen, die beispielsweise in der **US 2,678,935, US 3,539,518, US 4,022,808** oder **GB 1,050,497** beschrieben werden, deren Offenbarung auch Teil der vorliegenden Anmeldung ist.

Die alkoxylierten Fettsäureester können durch alle dem Fachmann bekannten Methoden hergestellt werden, z.B. durch Veresterung von Fettsäuren mit alkoxyliertem Methanol, wie es die US 3,539,518 beschreibt. Dieses Verfahren ist jedoch mit einigen Nachteilen verbunden, es verläuft zweistufig, die Veresterung dauert sehr lange und die Produkte sind durch die hohen Reaktionstemperaturen gefärbt. Außerdem besitzen solchermaßen hergestellte Fettsäuremethylesterethoxylate nach der Veresterung relativ hohe OH-Zahlen, was für manche Anwendungen problematisch sein kann.
Eine weitere Möglichkeit besteht in der direkten Umsetzung von Fettsäureestern mit Alkylenoxiden in Gegenwart von Übergangsmetallkatalysatoren, wie in der **US 4,022,808** beschrieben.
Vorzugsweise werden die Fettsäurealkylesteralkoxylate aber durch eine heterogen katalysierte Direktalkoxylierung von Fettsäurealkylestern mit Ethylenoxid und/oder Propylenoxid an calcinierten bzw. hydrophobierten Hydrotalciten hergestellt. Dieses Syntheseverfahren sind in den Offenlegungsschriften **WO 90/13533** und **WO 91/15441,** deren Offenbarung auch Teil der vorliegenden Anmeldung ist, ausführlich beschrieben. Die dabei entstehenden Produkte zeichnen sich durch eine niedrige OH-Zahl aus, die Reaktion wird einstufig durchgeführt und man erhält hellfarbige Produkte. Die als Ausgangsstoffe dienenden Fettsäurealkylester können sowohl aus natürlichen Ölen und Fetten gewonnen als auch auf synthetischem Wege hergestellt werden.

Die alkoxylierten Fettsäureester enthalten mindestens 1 Mol Propylenoxidgruppen pro Mol Ester. Bevorzugt sind Verbindungen der Formel (I), die pro Mol Ester zwischen 1 und 10 Mol Propylenoxid enthalten. Es ist bevorzugt, daß zusätzlich zu den Propylenoxideinheiten noch zwischen einer und 40 Ethylenoxidgruppen im Molekül enthalten sind. Bevorzugt sind solche Verbindungen der Formel (I), die zwischen 1 und 30 Mol Ethylenoxid pro Mol Ester enthalten. Bei diesen gemischten Ethylenoxid/Propylenoxid-Addukten können sowohl solche Verbindungen verwendet werden, die mit einer Mischung aus Ethylenoxid und Propylenoxid umgesetzt wurden, aber auch Verbindungen, die in zwei getrennten Schritten mit Ethylenoxid und Propylenoxid umgesetzt wurden.
Werden Verbindungen der Formel (I) eingesetzt, die als Alkoholrest RO Polyole enthalten, so beziehen sich die Angaben zur Menge der Ethylen- bzw. Propylenoxideinheiten (Indizes n und m) immer auf das gesamte Molekül. Die genaue Verteilung der Ethylen- bzw. Propylenoxideinheiten auf die verschiedenen Hydroxylgruppen der Polyole gehorcht aber bekanntermaßen einer vom Syntheseverfahren abhängigen Verteilungen.

Die Fettsäureesterreste -CO-R" enthalten Alkylreste R" mit 5 bis 29 C-Atomen. Als Fettsäurekomponente eignen sich natürliche oder synthetische Fettsäuren, insbesondere geradkettigte, gesättigte oder ungesättigte C₆-C₃₀ Fettsäuren, einschließlich technischer Gemische derselben, wie sie durch Fettspaltung aus tierischen und pflanzlichen Fetten und Ölen zugänglich sind, z.B. aus Kokosöl, Palmkernöl, Sojaöl, Sonnenblumenöl, Rüböl, Baumwollsaatöl, Fischöl, Rindertalg und Schweineschmalz; spezielle Beispiele sind Capryl-, Caprin-, Laurin-, Laurolein-, Myristin-, Myristolein-, Palmitin-, Palmitolein-, Öl-, Elaidin-, Arachin-, Gadolein-, Behen- und Erucasäure.

Als Alkoholkomponente RO sind geradkettigte oder verzweigte, gesättigte oder ungesättigte einwertige Alkohole mit 1 bis 6 C-Atomen, z.B. Methanol, Ethanol, n- und i-Propanol, n- und i-Butanol, Pentanol, Hexanol, 2-Ethylhexanol und Cyclohexanol geeignet. Als Polyole mit 2 bis 6 C-Atomen können beispielsweise Ethylenglykol, 1,2-Propylenglykol, 1,2-Butylenglykol Glycerin oder Trimethylolpropan und Penthaerythrit verwendet werden.
Grundsätzlich sind alle Hydroxylgruppen der Alkohole mit den Alkoxiden substituiert, allerdings sind nicht alle endständigen Alkoxidreste mit Estergruppen verschlossen. Wird von Polyolen als Alkoholkomponente RO ausgegangen, wie Glycerin oder Ethylenglykol, können die Mittel daher sowohl Verbindungen der Formel (I) enthalten, die durch Umsetzung der Vollester als auch der Partialester mit Alkoxiden erhalten werden. Es sind aber solche Verbindungen der Formel (I) bevorzugt, bei denen alle Hydroxlygruppen der Alkohole alkoxyliert und weiterhin alle endständigen Alkoxid-Gruppen mit Estergruppen der Formel -CO-R" verschlossen sind. Bei diesen bevorzugten Verbindungen steht der Rest R" in der Formel (I) daher ausschließlich für einen verzweigten oder linearen, gesättigten oder ungesättigten Alkylrest mit 5 bis 29 C-Atomen.

In den erfindungsgemäßen Mitteln werden weiterhin vorzugsweise solche alkoxylierten Fettsäureester der Formel (I) eingesetzt, deren Fettsäurekomponente ausgewählt ist aus linearen, unverzweigten C₆ bis C₁₈ Fettsäuren und deren Alkoholkomponente Methanol darstellt, wobei diese Ester der Formel (I) vorzugsweise zwischen 1 und 3 Mol Propylenoxid und zwischen 1 und 6 Mol Ethylenoxid pro Mol Ester enthalten. Solche Verbindungen können beispielsweise durch die oben beschriebenen Reaktionen von

### Geänderte Beschreibungsseite 5:

Palmitin-, Stearin-, Olein-, Linolin- oder Linolensäure Laurin- und Myristinsäure bzw. deren Estern mit Alkoxiden erhalten werden. Des weiteren sind solche Mittel im Sinne der Erfindung bevorzugt, die Verbindungen der Formel (I) enthalten, in denen RO für einen Methanolrest und R" für einen verzweigten oder linearen, gesättigten oder ungesättigten Alkylrest mit 5 bis 17 C-Atomen steht.

Geeignet sind auch alkoxylierte Ester, bei denen als Alkoholkomponente Glycerin verwendet wird und die Fettsäurekomponente ausgewählt wird aus gesättigten oder ungesättigten, verzweigten oder unverzweigten Fettsäuren mit 18 bis 22 C-Atomen und die Ester zwischen 3 und 10 Mol Propylenoxid pro Mol Ester enthalten. Insbesondere bevorzugt sind solche Verbindungen der Formel (I), die zusätzlich noch zwischen 1 und 30 Mol Ethylenoxid pro Mol Ester enthalten. Derartige Verbindungen können beispielsweise durch Umsetzung von Glycerinestern natürlicher Fettsäuren wie beispielsweise Palm-, Raps-, oder vorzugsweise von Ricinusöl mit Ethylenoxid erhalten werden.

Die in den erfindungsgemäßen Mitteln enthaltenen Verbindungen der Formel (I) sind nichtionische Verbindungen, die zusätzlich auch durch ihren HLB-Wert (hydrophilic-lipophilicbalance gemäß der Definition von Griffin; siehe **Römpp Lexikon Chemie, 10. Auflage 1997, Seite 1764)** charakterisiert werden können. Es sind solche Mittel bevorzugt, die Verbindungen der Formel (I) mit HLB-Werten zwischen 4 und 10 und insbesondere zwischen 5 und 9 enthalten.

Die in den erfindungsgemäßen Mitteln enthaltenen agrochemische Wirkstoffe sind in Wasser bei Raumtemperatur (entspricht 21 °C) nicht oder nur wenig löslich. Wenig löslich heißt, daß weniger als 10 Gew.-% in Wasser löslich sind, insbesondere weniger als 1 Gew.-%. Die agrochemischen Mittel können bei Raumtemperatur fest oder flüssig sein. Im Rahmen der vorliegenden Anmeldung werden unter agrochemischen Wirkstoffen solche Substanzen verstanden, die dem Pflanzenschutz dienen, aber auch Herbizide oder Düngemittel. Unter Pflanzenschutzmittel fallen auch Insektizide, Akarizide, Nematizide aber auch Repellents oder Rodentizide, Sexuallockstoffe, Säugetier- und Vogelabschreckmittel und Chemosterilantien wie

### Geänderte Beschreibungsseite 5a:

sie z.B. in **Chemie der Pflanzenschutz- und Schädlingsbekämpfungsmittel, Band 1, Herausgeber: R. Wegeler, Springer-Verlag Berlin, 1970,** beschrieben werden. Je nach verwendetem Wirkstoff kann es notwendig sein, die Mittel auf einen bestimmten, für den Wirkstoff optimalen pH-Wert anzupassen.

Die Mittel enthalten mindestens einen wasserunlöslichen agrochemischen Wirkstoff, es sind aber auch Mischungen verschiedener Wirkstoffe möglich. Die erfindungsgemäßen Mittel können den Wirkstoff sowohl in angereicherter Form enthalten, d.h. es handelt sich um Konzentrate mit mehr als 50 Gew.-% bis maximal 90 Gew.-% Wirkstoff. Sie können aber auch in verdünnter Form vorliegen. Bevorzugt sind Mittel, die zwischen 0,1 und 10 Gew.-% an Wirkstoffen, bezogen auf das Gewicht der Mittel, enthalten. Der Wasseranteil der erfindungsgemäßen Mittel liegt vorzugsweise zwischen 10 und 90 Gew.-%.

Die erfindungsgemäßen Dispersionen enthalten in der Regel nur geringe Mengen an Verbindungen der Formel (I). Üblicherweise liegt deren Gehalt zwischen 0,1 und 15 Gew.-%. Das Mengenverhältnis zwischen den Verbindungen der Formel (I) und den Wirkstoffen liegt vorzugsweise zwischen 1 : 1 und 1 : 100. Besonders bevorzugt sind solche Mittel, bei denen das Gewichtsverhältnis zwischen den Verbindungen der Formel (I) und den Wirkstoffen im Bereich von 1 : 10 bis 1 : 80 und insbesondere im Bereich von 1 : 2 bis 1 : 5 beträgt.

Neben den Wirkstoffen und den Verbindungen der Formel (I) können die erfindungsgemäßen wäßrigen Mittel noch weitere übliche Inhaltsstoffe und Additive enthalten. Dazu zählen Lösungsmittel, wie Ethlyen- oder Propylenglykole und C₁-C₆-Alkohole, feste Trägerstoffe, wie Lignin, Lignin-Derivate oder Tone und weitere bekannte Emulgatoren bzw. Dispergatoren. Die Dispersionen können auch zusätzlich noch wasserlösliche agrochemische Wirkstoffe enthalten. Besonders bevorzugt sind jedoch solche Mittel, die ausschließlich Emulgatoren der Formel (I) enthalten und ansonsten keine weiteren Emulgatoren oder Dispergatoren enthalten. Die erfindungsgemäßen Mittel sind auch bei Temperaturen von über 30 °C lagerstabil und lassen sich ohne Einwirkung hoher Scherkräfte, beispielsweise durch manuelles Umrühren, herstellen.

Ein weiterer Gegenstand der vorliegenden Anmeldung betrifft die Verwendung von Verbindungen der Formel (I) zur Herstellung von wäßrigen Mitteln, die wasserunlösliche agrochemische Wirkstoffe enthaltenden, wobei mindestens ein agrochemischer Wirkstoff zusammen mit Verbindungen der Formel (I) in Wasser dispergiert oder emulgiert wird.

Die erfindungsgemäßen Mittel bilden sich ohne Anwendung starker Scherkräfte, z.B. durch einfaches Umrühren per Hand. Die Verbindungen der Formel (I) können dazu beispielsweise in flüssiger Form vorgelegt werden. Anschließend wird dann der Wirkstoff zugegeben und diese Mischung in Wasser dispergiert. Werden Verbindung der Formel (I) mit Schmelzpunkten oberhalb der Raumtemperatur eingesetzt, können sie in geschmolzener Form verwendet werden. Es ist aber bevorzugt solche Verbindungen der Formel (I) einzusetzen, die einen Schmelzpunkt unterhalb von 25 °C aufweisen. Es ist aber auch möglich zunächst eine Mischung des agrochemischen Wirkstoffs in Wasser herzustellen und diese Mischung anschließend durch Zugabe von Verbindungen der Formel (I) zu emulgieren bzw. dispergieren.

Weiterhin wird ein Verfahren zum Behandeln von Pflanzen mit agrochemischen Wirkstoffen beansprucht, wobei eine wäßrige Dispersion gemäß der obigen Beschreibung in jeder dem Fachmann bekannten Art auf die Pflanzen aufgebracht wird, insbesondere durch Aufsprühen.

## Patentansprüche

1. Wäßriges Mittel, das mindestens einen agrochemischen Wirkstoff enthält, der bei 21° C zu weniger als 10 Gew.-% in Wasser löslich ist, sowie eine oder mehrere Verbindungen der allgemeinen Formel (I) **dadurch gekennzeichnet, dass** es eine oder mehrere Verbindungen der allgemeinen Formel (I) enthält,
RO-(C₂H₄O)ₙ(C₃H₆O)ₘ-R' (I)
in der RO für einen Alkoholrest, ausgewählt aus der Gruppe der verzweigten oder linearen, gesättigten oder ungesättigten einwertigen Alkohole mit 1 bis 6 C-Atomen oder der Polyole mit 2 bis 12 C-Atomen und 2 bis 6 Hydroxylgruppen steht und R' für Wasserstoff und/oder eine Estergruppe -CO-R" steht, in der R" einen verzweigten oder linearen, gesättigten oder ungesättigten Alkylrest mit 5 bis 29 C-Atomen bedeutet, m eine Zahl zwischen 1 und 10 ist und n Null ist oder eine Zahl zwischen 1 und 40 bedeutet.

2. Mittel nach Anspruch 1, **dadurch gekennzeichnet, daß** in den Verbindungen der Formel (I) R" ausschließlich für einen verzweigten oder linearen, gesättigten oder ungesättigten Alkylrest mit 5 bis 29 C-Atomen steht.

3. Mittel nach Anspruch 1 oder 2, **dadurch gekennzeichnet, daß** in den Verbindungen der Formel (I) RO für einen Glycerinrest und R" für einen verzweigten oder linearen, gesättigten oder ungesättigten Alkylrest mit 17 bis 21 C-Atomen steht.

4. Mittel nach Ansprüchen 1 bis 3, **dadurch gekennzeichnet, daß** in den Verbindungen der Formel (I) m eine Zahl zwischen 1 und 6 und n eine Zahl zwischen 1 und 30 bedeutet.

5. Mittel nach einem der Ansprüche 1 bis 4, **dadurch gekennzeichnet, daß** in den Verbindungen der Formel (I) m eine Zahl zwischen 1 und 3 und n eine Zahl zwischen 1 und 6 bedeutet.

6. Mittel nach den Ansprüchen 1 bis 5, **dadurch gekennzeichnet, daß** in den Verbindungen der Formel (I) -CO-R" für einen Ricinolsäurerest und RO für einen Glycerinrest stehen.

7. Mittel nach Anspruch 1, **dadurch gekennzeichnet, daß** in den Verbindungen der Formel (I) RO für einen Methanolrest und R" für einen verzweigten oder linearen, gesättigten oder ungesättigten Alkylrest mit 5 bis 17 C-Atomen steht.

8. Mittel nach einem der Ansprüche 1 bis 7, **dadurch gekennzeichnet, daß** die Verbindungen der Formel (I) einen HLB-Wert zwischen 4 und 10 aufweisen.

9. Mittel nach einem der Ansprüche 1 bis 8, **dadurch gekennzeichnet, daß** sie zwischen 10 und 90 Gew.-% Wasser, bezogen auf das Gewicht der Mittel, enthalten.

10. Mittel nach einem der Ansprüche 1 bis 9, **dadurch gekennzeichnet, daß** sie zwischen 0,1 und 10 Gew.-% an Wirkstoffen, bezogen auf das Gewicht der Mittel, enthalten.

11. Verwendung von Verbindungen der Formel (I) gemäß Anspruch 1 zur Herstellung von wäßrigen, wasserunlösliche agrochemische Wirkstoffe enthaltende Mitteln, **dadurch gekennzeichnet, daß** der Wirkstoff und die Verbindungen der Formel (I) mit Wasser dispergiert bzw. emulgiert werden.

12. Verfahren zum Aufbringen von agrochemischen Wirkstoffen auf Pflanzen, **dadurch gekennzeichnet, daß** eine wäßriges Mittel gemäß Anspruch 1 auf die Pflanzen aufgebracht wird.

## Claims

1. A water-based composition containing at least one agrochemical with a solubility in water at 21°C of less than 10% by weight and one or more compounds corresponding to general formula (I), **characterized in that** it contains one or more compounds corresponding to general formula (I):
RO-(C₂H₄O)ₙ(C₃H₆O)ₘ-R' (I)
in which RO is an alcohol selected from the group of branched or linear, saturated or unsaturated monohydric alcohols containing 1 to 6 carbon atoms or polyols containing 2 to 12 carbon atoms and 2 to 6 hydroxyl groups and R' is hydrogen and/or an ester group -CO-R", where R" is a branched or linear, saturated or unsaturated alkyl group containing 5 to 29 carbon atoms, m is a number of 1 to 10 and n is 0 or a number of 1 to 40.

2. A composition as claimed in claim 1, **characterized in that**, in the compounds of formula (I), R" is exclusively a branched or linear, saturated or unsaturated alkyl group containing 5 to 29 carbon atoms.

3. A composition as claimed in claim 1 or 2, **characterized in that**, in the compounds corresponding to formula (I), RO is a glycerol residue and R" is a branched or linear, saturated or unsaturated alkyl group containing 17 to 21 carbon atoms.

4. A composition as claimed in claims 1 to 3, **characterized in that**, in the compounds of formula (I), m is a number of 1 to 6 and n is a number of 1 to 30.

5. A composition as claimed in any of claims 1 to 4, **characterized in that**, in the compounds of formula (I), m is a number of 1 to 3 and n is a number of 1 to 6.

6. A composition as claimed in claims 1 to 5, **characterized in that**, in the compounds of formula (I), -CO-R" is a ricinoleic acid residue and RO is a glycerol residue.

7. A composition as claimed in claim 1, **characterized in that**, in the compounds of formula (I), RO is a methanol residue and R" is a branched or linear, saturated or unsaturated alkyl group containing 5 to 17 carbon atoms.

8. A composition as claimed in any of claims 1 to 7, **characterized in that** the compounds of formula (I) have an HLB value of 4 to 10.

9. A composition as claimed in any of claims 1 to 8, **characterized in** it contains between 10 and 90% by weight of water, based on the weight of the composition.

10. A composition as claimed in any of claims 1 to 9, **characterized in that** it contains between 0.1 and 10% by weight of agrochemicals, based on the weight of the composition.

11. The use of the compounds corresponding to formula (I) in claim 1 for the production of water-based compositions containing water-insoluble agrochemicals, **characterized in that** the agrochemical and the compounds corresponding to formula (I) are dispersed or emulsified with water.

12. A process for applying agrochemicals to plants, **characterized in that** the water-based composition claimed in claim 1 is applied to the plants.

## Revendications

1. Produit aqueux qui renferme au moins un principe actif agrochimique soluble dans l'eau à 21°C pour moins de 10 % en poids, ainsi qu'un ou plusieurs composés de formule générale (I),
**caractérisé en ce qu'** il contient un ou plusieurs composés de formule générale (I) :
RO - (C₂H₄O)n (C₃H₆O)m - R' (I)
dans laquelle RO représente un reste alcool choisi dans le groupe des alcools ramifiés ou linéaires, saturés ou non saturés, monofonctionnels, ayant de 1 à 6 atomes de carbone, ou des polyols ayant de 2 à 12 atomes de carbone et de 2 à 6 groupes hydroxyle, et R' représente de l'hydrogène et/ou un groupe ester - COR" dans lequel R" signifie un reste alkyle ramifié ou linéaire, saturé ou non saturé ayant de 5 à 29 atomes de carbone, m signifie un nombre compris entre 1 et 10 et n est égal à zéro ou signifie un nombre compris entre 1 et 40.

2. Produit selon la revendication 1,
**caractérisé en ce que** dans les composés de formule (I) R" représente exclusivement un reste alkyle ramifié ou linéaire, saturé ou non saturé ayant de 5 à 29 atomes de carbone.

3. Produit selon la revendication 1 ou 2,
**caractérisé en ce que** dans les composés de formule (I) RO représente un reste de glycérol et R" un reste alkyle ramifié ou linéaire saturé ou non saturé ayant de 17 à 21 atomes de carbone.

4. Produit selon les revendications 1 à 3,
**caractérisé en ce que** dans les composés de formule (I) m signifie un nombre compris entre 1 et 6, et n un nombre compris entre 1 et 30.

5. Produit selon l'une des revendications 1 à 4,
**caractérisé en ce que** dans les composés de formule (I) m signifie un nombre compris entre 1 et 3 et n un nombre compris entre 1 et 6.

6. Produit selon les revendications 1 à 5,
**caractérisé en ce que** dans les composés de formule (I) - CO - R" représente un reste d'acide ricinoléique et RO représente un reste de glycérol.

7. Produit selon la revendication 1,
**caractérisé en ce que** dans les composés de formule (I) RO représente un reste de méthanol et R" un reste alkyle ramifié ou linéaire, saturé ou non saturé, ayant de 5 à 17 atomes de carbone.

8. Produit selon l'une des revendications 1 à 7,
**caractérisé en ce que** les composés de formule I possèdent une valeur de HLB comprise entre 4 et 10.

9. Produit selon l'une des revendications 1 à 8,
**caractérisé en ce qu'** il renferme entre 10 et 90 % en poids d'eau rapporté au poids du produit.

10. Produit selon l'une des revendications 1 à 9,
**caractérisé en ce qu'** il renferme entre 0,1 et 10 % en poids de principes actifs, rapportés au poids du produit.

11. Utilisation de composés de formule (I) selon la revendication 1, pour la production de produits contenant des principes actifs agro chimiques aqueux, insolubles dans l'eau,
**caractérisée en ce que** le principe actif et les composés de formule (I) sont dispersés ou mis en émulsion avec de l'eau.

12. Procédé d'application de principes actifs agrochimiques sur des plantes,
**caractérisé en ce qu'** on applique un produit aqueux conforme à la revendication 1, sur les plantes.
